# EUROPÄISCHE PATENTSCHRIFT

(11) **EP 0 993 061 B1**
(45) Veröffentlichungstag und Bekanntmachung des Hinweises auf die Patenterteilung: **09.06.2004**
(21) Anmeldenummer: 99116661.2
(22) Anmeldetag: 26.08.1999
(51) Int. Cl.: H01M 10/40, H01M 10/42

(54) **Sekundäre Lithium-Ionen-Zelle**
Secondary lithium ion cell
Pile rechargeable à ions lithium

(30) Priorität: 05.10.1998 DE 19845668
(43) Veröffentlichungstag der Anmeldung: 12.04.2000
(73) Patentinhaber: VARTA Automotive Systems GmbH, 30419 Hannover (DE)
(72) Erfinder: Meissner, Eberhard, Dr., 65719 Hofheim (DE)
(74) Vertreter: Lins, Edgar, Dipl.-Phys. Dr.jur.

(56) Entgegenhaltungen:
- EP-A- 0 867 954
- DE-A- 19 528 049
- US-A- 5 759 715
- PATENT ABSTRACTS OF JAPAN vol. 1996, no. 11, 29. November 1996 (1996-11-29) & JP 08 190934 A (HITACHI LTD), 23. Juli 1996 (1996-07-23)
- PATENT ABSTRACTS OF JAPAN vol. 1996, no. 10, 31. Oktober 1996 (1996-10-31) & JP 08 162163 A (KANEBO LTD), 21. Juni 1996 (1996-06-21)

## Beschreibung

Die Erfindung betrifft sekundäre Lithium-Ionen-Zellen mit mindestens einer Lithium interkalierenden kohlenstoffhaltigen negativen Elektrode, einem nichtwäßrigen, Lithium-Ionen leitenden Elektrolyten und mindestens einer Lithium interkalierenden, eine lithiumhaltige Chalkogen-Verbindung eines Übergangsmetalls enthaltenden positiven Elektrode, wobei die Elektroden durch Separatoren voneinander getrennt sind.

Lithium-Ionen-Zellen besitzen eine negative und eine positive Elektrode, in die Lithium reversibel ein- und ausgelagert werden kann. Beim Be- und Entladen der Lithium-Ionen-Zellen wird Lithium abwechselnd in der positiven und in der negativen Elektrode gespeichert, so daß die Gesamtmenge an zyklisierbarer Ladung der zwischen den beiden Elektroden hin- und her fließenden Lithiummenge entspricht. Die Menge der beim Zusammenbau der Lithium-Ionen-Zellen verwendeten aktiven Materialien einer der beiden Elektroden wird üblicherweise so gewählt, daß in ihr die für den späteren Zyklenbetrieb zur Verfügung stehende Menge an Lithium gespeichert ist. In vielen Fällen wird als aktives Material eine lithiumhaltige Verbindung wie z.B. Lithium-Manganspinell, Lithium-Cobaltoxid, Lithium-Nickeloxid oder von diesen Verbindungen abgeleitete Stoffe bzw. Gemische aus diesen Stoffen als positives Elektrodenmaterial verwendet.

Als negatives aktives Material werden beispielsweise Kohlenstoff oder Metalloxide eingesetzt.

Beim Zusammenbau der Lithium-Ionen-Zellen und deren Befüllung mit Elektrolyt haben die genannten aktiven Materialien nur einen Potentialunterschied bis maximal 2 Volt gegeneinander. Der Potentialunterschied zwischen den Elektroden liegt nach der Ladung der Lithium-Ionen-Zelle in der Größenordnung von ca. 4 Volt. Bei der erstmaligen Ladung der Lithium-Ionen-Zelle wird Lithium aus der positiven Elektrode deinterkaliert und in die negative Elektrode eingebracht. Dadurch wird das Potential der negativen Elektrode deutlich abgesenkt (in Richtung auf das Potential von metallischem Lithium) und das Potential der positiven Elektrode wird weiter erhöht (zu noch positiveren Werten). Durch diese Potentialänderungen kann es sowohl auf der positiven als auch insbesondere auf der negativen Elektrode zu parasitären Reaktionen kommen. So ist von Kohlenstoffelektroden bekannt, daß sich auf ihren Oberflächen Zersetzungsprodukte bilden, welche aus Lithium und Komponenten des Elektrolyten bestehen (solid electrolyte interface, SEI). Diese auch als Deckschichten bezeichneten Oberflächenschichten sind Lithium-Ionen-Leiter, die eine elektronische Verbindung zwischen der negativen Elektrode und dem Elektrolyten herstellen und ein weiteres Fortschreiten der Reaktionen unterbinden. Die Bildung dieser Deckschicht ist somit für die Stabilität des aus der negativen Elektrode und dem Elektrolyten bestehenden Halbzellensystems notwendig. Andererseits wird jedoch bei ihrer Bildung ein Teil des über die positive Elektrode in die Zellen eingebrachten Lithiums unwiederbringlich gebunden und damit für den Zyklenbetrieb, d.h. der für den Anwender zur Verfügung stehenden Kapazität, entzogen. Das bedeutet, daß bei der ersten Entladung nicht mehr so viel Lithium von der negativen Elektrode zur positiven Elektrode gelangt, wie zuvor bei der ersten Ladung an die negative Elektrode abgegeben wurde.

Nachteilig ist weiterhin, daß sich die Deckschicht auf der negativen Elektrode nach der ersten Ladung noch nicht vollständig ausgebildet hat, sondern ihre Bildung während der darauffolgenden Lade- und Entladezyklen noch weiter voranschreitet. Auch wenn sich dieser Prozeß während der weiteren Lade- und Entladezyklen abschwächt, so wird doch dadurch dem System laufend Lithium entzogen, welches für den Zyklenbetrieb und damit für die Kapazität der Zelle nicht mehr zur Verfügung steht.

Aus den Dokumenten US-A 5,340,670 und US-A 5,432,029 sind aktive Materialien für negative Elektroden von Lithium-Ionen-Zellen bekannt, die einen geringeren irreversiblen Kapazitätsverlust zeigen sollen. Weiterhin sind aus den Dokumenten US-A 4,980,250 und US-A 5,436,093 Verfahren bekannt, durch die Lithium in das aktive Material der negativen Elektrode eingebracht wird, um dadurch den Verbrauch an Lithium und somit den irreversiblen Kapazitätsverlust zu minimieren. Die erstgenannten Dokumente führen allerdings zu Materialien die den irreversiblen Kapazitätsverlust noch weiterhin zeigen und die Verfahren zur Vorlithiierung des negativen aktiven Materials führen zu Elektroden, die nur unter Trockenraumbedingungen handhabbar sind.

Aus dem Dokument DE-A 195 28 049 sind Lithium-Ionen-Zellen bekannt, bei denen eine lithiumreiche Verbindung wie metallisches Lithium oder eine Lithiumlegierung in der Weise in die Zellen eingebracht ist, daß sie nach der Befüllung der Zelle mit Elektrolyt in elektrolytischen Kontakt zu mindestens einer der Elektroden steht Der Potentialunterschied zwischen den Elektrodenmaterialien führt dazu, daß ein Ausgleichsstrom zwischen dem jeweiligen aktiven Elektrodenmaterial und der eingebrachten lithiumreichen Verbindung fließt und damit Lithium in die Elektroden zusätzlich eingebracht wird. Dieses zusätzliche Lithium kann den durch die genannten parasitären Reaktionen eintretenden irreversiblen Kapazitätsverlust vermindern oder sogar weitgehend beseitigen.

Problematisch bei dieser Vorgehensweise ist jedoch, daß eine lokale Anreicherung von Lithium nicht ausgeschlossen ist. Diese lokalen Anreicherung stellen entweder ein massives Sicherheitsrisiko aufgrund der hohen Reaktivität von elektrolytisch abscheidenden Lithiummetall dar oder sie führen dazu, dass das lithiumspeichernde positive Elektrodenmaterial in eine Phase überführt wird, die für den weiteren Zyklenbetrieb weniger geeignet ist.

Durch Patent Abstracts of Japan Vol. 1996, Nr. 11 & JP 08190934 A ist eine nichtwässrige Sekundärzelle bekannt, die eine von den Elektroden elektrisch isolierte Hilfselektrode aufweist. Die Hilfselektrode liegt an der Innenseite eines Bechers der Zelle, mit dem sie leitend verbunden ist. Sie befindet sich im ständigen Kontakt mit dem Elektrolyten.

EP-A-0 867 954 offenbart eine Batterie mit einer Opferlelektrode, die von den Elektroden isoliert im ständigen Kontakt mit dem Elektrolyten steht. Die Funktion der Opferelektrode besteht in dem kathodischen Schutz des metallischen Zellengehäuses.

Durch Patent Abstracts of Japan Vol. 1996, Nr. 10 & JP 08162163 A ist eine Batterie mit einem organischen Elektrolyten bekannt, die eine Hilfselektrode zur Nachlithierung aufweist, die im ständigen Kontakt mit dem Elektrolyten steht.

US-A-5,759,715 beschreibt eine Lithium-Ionen-Zelle, die aus einer Vorläuferzelle gebildet wird. In der Vorläuferzelle ist eine der Elektroden der Batterie eine Lithiumfolie. Danach wird die Lithiumfolie entfernt und die Batterie gebildet und verschlossen.

Die Erfindung hat sich die Aufgabe gestellt, ein Verfahren zur Herstellung einer Lithium-Ionen-Zelle und ein Verfahren für deren Betrieb anzugeben, die den irreversiblen Kapazitätsverlust ausgleichen bzw. minimieren und zu keinen Sicherheitsrisiken führen.

Erfindungsgemäß wird die Aufgabe durch die Verfahren gemäß den Ansprüchen 1 und 6 gelöst. Weitere Ausgestaltungen der Verfahren sind in den Unteransprüchen angegeben.

Nach der erfindungsgemäßen Lehre wird die zusätzliche Menge an Lithium weder vor dem Zusammenbau einer der Elektroden zugeführt noch automatisch nach der Befüllung der Zelle mit dem Elektrolyten an eine Elektrode abgegeben, sondern die Lithiummenge wird definiert zu einem späteren Zeitpunkt einer Elektrode zugeführt. Die Einbringung des Lithiums in eine der Elektroden erfolgt durch die Herstellung eines elektrolytischen Kontaktes der Hilfselektrode mit einer der Elektroden. Dies erfolgt erst, nachdem die Zelle zu mindestens 5 % ihrer Kapazität geladen wurde.

Vorzugsweise wird die elektronische Verbindung über einen speziellen Potentialanschluss z.B. einen dritten Anschlusspol oder die Mantelfläche eines metallischen Zellgefäßes welches gegen die Elektroden isoliert ist, vorgenommen. Der elektrolytische Kontakt wird dadurch hergestellt, dass die außerhalb des Elektrolytspiegels angeordnete Hilfselektrode erst durch Kippen der Zelle in elektrolytischen Kontakt kommt oder der Elektrolytspiegel durch Nachfüllung von Elektrolyt erhöht wird. Der Zeitpunkt für die elektrolytische und elektronische Verbindung der Hilfselektrode mit einer der Elektroden wird vorzugsweise so gewählt, dass er dem Zeitpunkt entspricht, bei dem beim Laden der Zelle eine der Elektroden eine starke Potentialänderung erfährt. Besonders bevorzugt ist der Zeitpunkt, an dem die Zelle in den Bereich des steilen Abfalls der Zellspannung bei der Entladung übergeht, wobei während des elektrolytischen und elektronischen Kontaktes der Hilfselektrode zu einer der Elektroden die Zellspannung auf einem konstanten Wert gehalten wird.

## Patentansprüche

1. Verfahren zur Herstellung einer sekundären Lithium-Ionen-Zelle mit mindestens einer lithiuminterkalierenden, kohlenstoffhaltigen negativen Elektrode, einem nichtwäßrigen, lithiumionenleitenden Elektrolyten und mindestens einer lithiuminterkalierenden, eine lithiumhaltige Chalkogenverbindung eines Übergangsmetalls enthaltenden positiven Elektrode, wobei die Elektroden durch einen Separator voneinander getrennt sind, und einer in der Zelle angeordneten lithiumhaltige Hilfselektrode, wobei die Hilfselektrode zum Zeitpunkt des Verschließens der Zelle räumlich vom Elektrolyten getrennt vorliegt.

2. Verfahren gemäß Anspruch 1, **dadurch gekennzeichnet, dass** die Hilfselektrode sich oberhalb des Elektrolytspiegels befindet.

3. Verfahren gemäß Anspruch 1 oder 2, **dadurch gekennzeichnet, dass** die Hilfselektrode elektrisch isoliert von den Elektroden ist.

4. Verfahren gemäß Anspruch 1 oder 3, **dadurch gekennzeichnet, dass** die Hilfselektrode einen eigenen Polanschluss besitzt.

5. Verfahren gemäß Anspruch 4, **dadurch gekennzeichnet, dass** die Zelle ein metallisches oder elektrisch leitfähiges Gehäuse besitzt, mit dem die Hilfselektrode in elektrischer Verbindung steht.

6. Verfahren zum Ausgleich des irreversiblen Kapazitätsverlustes bei einer sekundären Lithium-Ionen-Zelle hergestellt nach einem oder mehreren der Ansprüche 1 bis 5 **dadurch gekennzeichnet, dass** die lithiumhaltige Hilfselektrode mit dem Elektrolyt und einer der Elektroden in Kontakt gebracht wird, nachdem die Zelle zu mindestens 5 % ihrer Kapazität geladen wurde.

7. Verfahren nach Anspruch 6, **dadurch gekennzeichnet, dass** die lithiumhaltige Hilfselektrode mit dem Elektrolyt in Kontakt gebracht wird, nachdem die Zelle in den Bereich des steilen Abfalls der Zellenspannung bei der Entladung übergeht, wobei die Zellenspannung auf einem konstanten Wert gehalten wird.

## Claims

1. Method for production of a secondary lithium ion cell having at least one lithium-intercalating negative electrode containing carbon, a nonaqueous electrolyte which conducts lithium ions, and at least one lithium-intercalating positive electrode which contains a chalcogen compound (which contains lithium) of a transition metal, with the electrodes being separated from one another by a separator, and an auxiliary electrode which contains lithium and is arranged in the cell, with the auxiliary electrode being spatially separated from the electrolyte at the time when the cell is closed.

2. Method according to Claim 1, **characterized in that** the auxiliary electrode is located above the electrolyte level.

3. Method according to Claim 1 or 2, **characterized in that** the auxiliary electrode is electrically isolated from the electrodes.

4. Method according to Claim 1 or 3, **characterized in that** the auxiliary electrode has its own pole connection.

5. Method according to Claim 4, **characterized in that** the cell has a metallic or electrically conductive housing, to which the auxiliary electrode is electrically connected.

6. Method for compensation for the irreversible capacity loss in a secondary lithium ion cell produced according to one or more of Claims 1 to 5, **characterized in that** the auxiliary electrode, which contains lithium, is contacted with the electrolyte and with one of the electrodes once the cell has been charged to at least 5% of its capacity.

7. Method according to Claim 6, **characterized in that** the auxiliary electrode, which contains lithium, is contacted with the electrolyte once the cell enters the region of the steep drop in the cell voltage during discharging, with the cell voltage being kept at a constant value.

## Revendications

1. Procédé de fabrication d'une pile secondaire à ions de lithium comprenant au moins une électrode négative contenant du carbone et du lithium intercalaire, un électrolyte non aqueux, conducteur d'ions de lithium et au moins une électrode positive à lithium intercalaire, comportant une combinaison chalcogénique de lithium et d'un métal transitoire, selon lequel
les électrodes sont séparées par un séparateur et une électrode auxiliaire installée dans la pile et comportant du lithium est séparée spécialement de l'électrolyte au moment de la fermeture de la pile.

2. Procédé selon la revendication 1,
**caractérisé en ce que**
l'électrode auxiliaire se trouve au-dessus du niveau de l'électrolyte.

3. Procédé selon la revendication 1 ou 2,
**caractérisé en ce que**
l'électrode auxiliaire est isolée électriquement des électrodes.

4. Procédé selon la revendication 1 ou 2,
**caractérisé en ce que**
l'électrode auxiliaire possède son propre branchement polaire.

5. Procédé selon la revendication 4,
**caractérisé en ce que**
la pile comporte un boîtier métallique ou conducteur électrique auquel l'électrode auxiliaire est reliée électriquement.

6. Procédé de compensation des pertes capacitives irréversibles d'une pile secondaire à ions de lithium fabriquée selon un procédé correspondant à une ou plusieurs des revendications 1 à 5,
**caractérisé en ce que**
l'électrode auxiliaire contenant du lithium est mise en contact avec l'électrolyte et l'une des électrodes après que la pile soit chargée à au moins 5 % de sa capacité.

7. Procédé selon la revendication 6,
**caractérisé en ce que**
l'électrode auxiliaire contenant du lithium est mise en contact avec l'électrolyte après que la pile soit passée dans la zone de la pente descendante de la courbe de tension de la pile lors de la décharge, de manière à maintenir la tension de la pile à une valeur constante.
